# EUROPEAN PATENT APPLICATION

(11) **EP 4 647 144 A1**
(43) Date of publication of application: **12.11.2025**
(21) Application number: 25154810.3
(22) Date of filing: 29.01.2025
(51) Int. Cl.: B01D 53/04, B01D 53/26, H01M 8/04007, H01M 8/04014, H01M 8/04119, H01M 8/0668

(54) **CARBON DIOXIDE RECOVERY APPARATUS**

(30) Priority: 01.02.2024 JP 2024013890
(71) Applicant: Aisin Corporation, Kariya, Aichi 448-8650 (JP)
(72) Inventor: KAJIKAWA, Atsushi, KARIYA, AICHI, 448-8650 (JP)
(74) Representative: Cabinet Beau de Loménie

(57) **Abstract**

A carbon dioxide recovery apparatus (10) for recovering carbon dioxide contained in an exhaust gas of a fuel cell system (1) includes: an inlet unit (11) configured to introduce the exhaust gas of the fuel cell system; a heat exchange unit (20) configured to cool the exhaust gas by heat exchange; a first moisture absorbing unit (30) configured to separate condensed water from the exhaust gas; a second moisture absorbing unit (40) configured to absorb moisture of the exhaust gas; a carbon dioxide recovery unit (50) configured to recover carbon dioxide from the exhaust gas; a first gas line (L1) connected to an outlet unit through the heat exchange unit, the first moisture absorbing unit, the second moisture absorbing unit, and the carbon dioxide recovery unit in this order from the inlet unit; and a pump (60) provided in the first gas line.

## Description

### TECHNICAL FIELD

This specification discloses a carbon dioxide recovery apparatus.

### BACKGROUND DISCUSSION

In the related art, as this type of carbon dioxide recovery apparatus, there has been proposed an apparatus provided with a bubbling facility for dissolving carbon dioxide contained in an exhaust gas discharged from a fuel cell (for example, see JP 2003-272693A (Reference 1)). The exhaust gas containing high-temperature water vapor and carbon dioxide discharged from the fuel cell is guided to the bubbling facility and is bubbled into water. Then, water in a bubbling tank is turned into hot water by heat of the high-temperature water vapor, and carbon dioxide in the exhaust gas is dissolved in the water by a bubbling effect to produce carbonated hot spring water. The carbonated hot spring water is supplied to a bathtub in a facility via a circulation pump, and is circulated in the bubbling facility.

However, since carbon dioxide contained in the exhaust gas of the fuel cell is only about several%, the carbonated hot spring water having a sufficient concentration cannot be produced even when the exhaust gas of the fuel cell is directly supplied into the water.

A need thus exists for a carbon dioxide recovery apparatus capable of efficiently recovering carbon dioxide having a high concentration from an exhaust gas of a fuel cell system.

### SUMMARY

A carbon dioxide recovery apparatus according to this disclosure is
a carbon dioxide recovery apparatus for recovering carbon dioxide contained in an exhaust gas of a fuel cell system, and includes:
an inlet unit configured to introduce the exhaust gas of the fuel cell system;
a heat exchange unit configured to cool the exhaust gas by heat exchange;
a first moisture absorbing unit configured to separate condensed water from the exhaust gas;
a second moisture absorbing unit configured to absorb moisture of the exhaust gas;
a carbon dioxide recovery unit configured to recover carbon dioxide from the exhaust gas;
a first gas line connected to an outlet unit through the heat exchange unit, the first moisture absorbing unit, the second moisture absorbing unit, and the carbon dioxide recovery unit in this order from the inlet unit; and
a pump provided in the first gas line.

In the carbon dioxide recovery apparatus according to this disclosure, the exhaust gas of the fuel cell system introduced into the inlet unit is cooled by the heat exchange unit, the condensed water generated by the cooling of the exhaust gas is separated by the first moisture absorbing unit, the moisture is absorbed by the second moisture absorbing unit, and then is supplied to the carbon dioxide recovery unit. Accordingly, since the carbon dioxide recovery apparatus recovers carbon dioxide from the exhaust gas in a state in which a temperature and humidity of the exhaust gas are caused to be lowered, it is possible to efficiently recover carbon dioxide having a high concentration. In addition, since the exhaust gas which is cooled by the heat exchange unit and from which the condensed water is separated by the first moisture absorbing unit is supplied to the second moisture absorbing unit, the humidity of the exhaust gas can be caused to be lowered by the second moisture absorbing unit with a smaller amount of moisture absorbent.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a schematic configuration diagram of a carbon dioxide recovery apparatus according to the present embodiment;
FIG. 2 is a diagram showing a flow of a gas (exhaust gas) in an exhaust recovery mode;
FIG. 3 is a diagram showing a flow of a gas (carbon dioxide) in a carbon dioxide separation mode; and
FIG. 4 is a diagram showing a flow of a gas (purge gas) in a moisture absorbent regeneration mode.

### DETAILED DESCRIPTION

An embodiment disclosed here will be described with reference to the drawings.

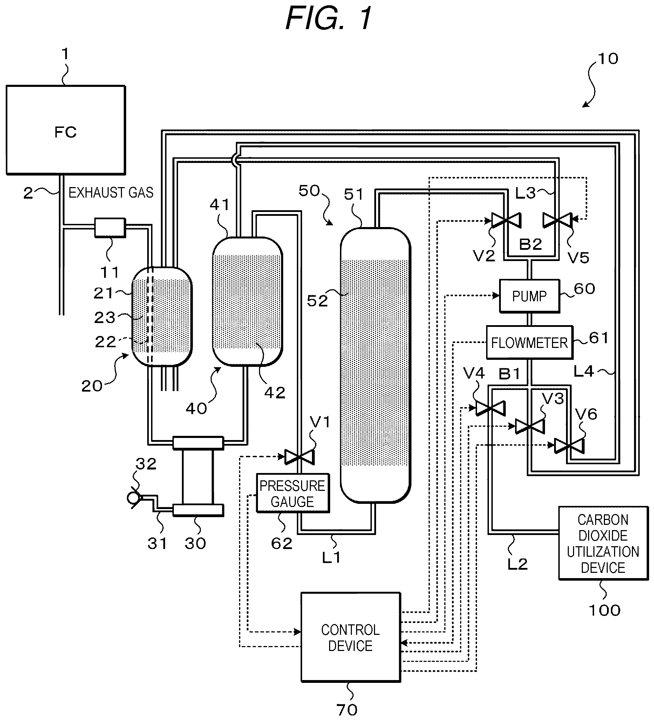

FIG. 1 is a schematic configuration diagram of a carbon dioxide recovery apparatus 10 according to the present embodiment. The carbon dioxide recovery apparatus 10 according to the present embodiment recovers carbon dioxide (CO₂) contained in an exhaust gas of a fuel cell system 1. The fuel cell system 1 includes a modifier that modifies a hydrocarbon-based raw fuel gas such as a natural gas or a LP gas to generate a hydrogen-containing fuel gas, a fuel cell stack that generates electricity by an electrochemical reaction based on the fuel gas generated by the modifier and an oxidant gas (air), and a combustor that causes an off gas discharged from the fuel cell stack to combust. The exhaust gas generated by the combustion of the off gas by the combustor includes water vapor and carbon dioxide. The carbon dioxide recovery apparatus 10 according to the present embodiment recovers carbon dioxide in the exhaust gas and supplies the recovered carbon dioxide to a carbon dioxide utilization device 100 at a necessary timing. Examples of the carbon dioxide utilization device 100 include a carbonated spring device that generates carbonated springs by causing carbon dioxide to dissolve in hot water.

The carbon dioxide recovery apparatus 10 according to the present embodiment includes an inlet unit 11 that introduces the exhaust gas of the fuel cell system 1, a heat exchange unit 20 that cools the exhaust gas, a first moisture absorbing unit 30 and a second moisture absorbing unit 40 that absorb moisture in the exhaust gas, a carbon dioxide recovery unit 50 that recovers carbon dioxide in the exhaust gas, a pump 60, a first gas line L1 to a fourth gas line L4, a first opening and closing valve V1 to a sixth opening and closing valve V6, and a control device 70 that controls the entire apparatus. The heat exchange unit 20, the first moisture absorbing unit 30, the second moisture absorbing unit 40, the carbon dioxide recovery unit 50, and the pump 60 are disposed in this order from the inlet unit 11 with respect to the first gas line L1.

The heat exchange unit 20 cools the exhaust gas. The heat exchange unit 20 includes a container 21 in which an internal space is formed, an exhaust gas flow path 22 that forms a part of the first gas line L1 and penetrates the internal space of the container 21, and a moisture absorbent 23 filled in the internal space of the container 21. The moisture absorbent 23 is a member having a moisture control function such as silica gel, and releases moisture with an endothermic reaction by being purged with dry air in a state of absorbing moisture. The heat exchange unit 20 cools the exhaust gas flowing through the exhaust gas flow path 22 by an endothermic effect of the moisture absorbent 23. In the present embodiment, a terminal end portion of the first gas line L1 is connected to the container 21 of the heat exchange unit 20, and the exhaust gas passing through the exhaust gas flow path 22 of the heat exchange unit 20, the first moisture absorbing unit 30, the second moisture absorbing unit 40, and the carbon dioxide recovery unit 50 is introduced as a purge gas into the internal space of the container 21 filled with the moisture absorbent 23 and then is discharged to the outside air.

The first moisture absorbing unit 30 is implemented as a moisture trap that recovers and stores condensed water generated by cooling the exhaust gas in the heat exchange unit 20. One end portion of a drain pipe 31 is connected to a bottom of the first moisture absorbing unit 30, and a check valve 32 is provided at the other end portion of the drain pipe 31. The check valve 32 opens when an internal pressure (positive pressure) of the first moisture absorbing unit 30 exceeds a set pressure. The first moisture absorbing unit 30 discharges the stored condensed water to the outside by opening the check valve 32.

The second moisture absorbing unit 40 absorbs moisture of the exhaust gas passing through the first moisture absorbing unit 30. The second moisture absorbing unit 40 includes a container 41 in which an internal space is formed, a moisture absorbent 42 filled in the internal space of the container 41, and a heater (not shown) for heating and regenerating the moisture absorbent 42. The moisture absorbent 42 of the second moisture absorbing unit 40 has a higher moisture absorbing ability than that of the moisture absorbent 23 of the heat exchange unit 20, and releases the absorbed moisture by being heated and is regenerated. As the moisture absorbent 42, for example, an A-type synthetic zeolite is used.

The carbon dioxide recovery unit 50 recovers carbon dioxide from the low-temperature and low-humidity exhaust gas that passes through the heat exchange unit 20, the first moisture absorbing unit 30, and the second moisture absorbing unit 40. The carbon dioxide recovery unit 50 includes a container 51 in which an internal space is formed, a carbon dioxide absorbent 52 filled in the internal space of the container 51, and a heater (not shown) for heating and regenerating the carbon dioxide absorbent 52. The carbon dioxide absorbent 52 selectively absorbs carbon dioxide contained in the exhaust gas and releases absorbed carbon dioxide by being heated. As the carbon dioxide absorbent 52, for example, an X-type synthetic zeolite is used. The container 51 is implemented as a storage tank that stores carbon dioxide absorbed by the carbon dioxide absorbent 52. Accordingly, the carbon dioxide recovery apparatus 10 can have a simpler configuration and can be downsized as compared with an apparatus including a separate storage tank for storing recovered carbon dioxide.

The pump 60 is a vacuum pump and is disposed downstream of the carbon dioxide recovery unit 50 in the first gas line L1.

The second gas line L2 is a line for supplying carbon dioxide recovered by the carbon dioxide recovery unit 50 to the carbon dioxide utilization device 100. The second gas line L2 branches at a branch point B1 downstream of the pump 60 in the first gas line L1 and is connected to the carbon dioxide utilization device 100.

The third gas line L3 and the fourth gas line L4 are lines for supplying purge air to the second moisture absorbing unit 40. The third gas line L3 branches at a branch point B2 between the carbon dioxide recovery unit 50 and the pump 60 in the first gas line L1 and is connected to the container 21 of the heat exchange unit 20. The fourth gas line L4 branches at the branch point B1 in the first gas line L1 and is connected to the container 41 of the second moisture absorbing unit 40.

The first opening and closing valve V1 is disposed downstream of the second moisture absorbing unit 40 and upstream of the carbon dioxide recovery unit 50 in the first gas line L1, the second opening and closing valve V2 is disposed downstream of the carbon dioxide recovery unit 50 and upstream of the pump 60 (upstream of the branch point B2) in the first gas line L1, and the third opening and closing valve V3 is disposed downstream of the pump 60 (downstream of the branch point B1) in the first gas line L1. The fourth opening and closing valve V4 is disposed in the second gas line L2. The fifth opening and closing valve V5 is disposed in the third gas line L3. The sixth opening and closing valve V6 is disposed in the fourth gas line L4.

A flowmeter 61 is disposed downstream of the pump 60 and upstream of the branch point B1 in the first gas line L1, and a pressure gauge 62 is disposed downstream of the first opening and closing valve V1 and upstream of the carbon dioxide recovery unit 50 in the first gas line L1.

Although not shown, the control device 70 is implemented as a microprocessor using a CPU as a core, and includes a ROM, a RAM, and an input and output port in addition to the CPU. Detection signals from the flowmeter 61, the pressure gauge 62, and the like are input to the control device 70 via input ports. In addition, a drive signal to the pump 60, a drive signal to the first opening and closing valve V1 to the sixth opening and closing valve V6, and the like are output from the control device 70 via output ports.

Next, operations of the carbon dioxide recovery apparatus 10 having the configuration as described above will be described. The carbon dioxide recovery apparatus 10 has, as operation modes thereof, an exhaust recovery mode, a carbon dioxide separation mode, and a moisture absorbent regeneration mode.

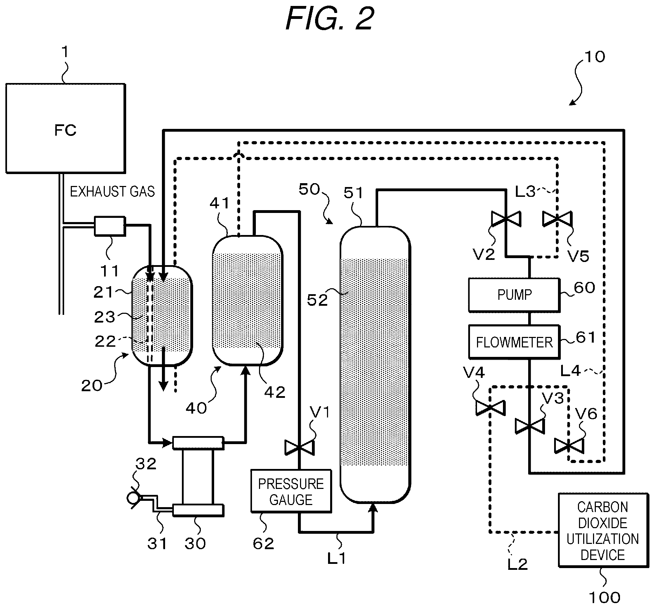

The exhaust recovery mode is a mode in which carbon dioxide in the exhaust gas discharged from the fuel cell system 1 is recovered. FIG. 2 is a diagram showing a flow of a gas (exhaust gas) in the exhaust recovery mode. In the exhaust recovery mode, the control device 70 opens the first opening and closing valve V1, the second opening and closing valve V2, and the third opening and closing valve V3 and closes the fourth opening and closing valve V4, the fifth opening and closing valve V5, and the sixth opening and closing valve V6 to cause the pump 60 to operate. By an operation of the pump 60, the exhaust gas from the fuel cell system 1 is absorbed into the inlet unit 11. The absorbed exhaust gas flows through the first gas line L1, sequentially passes through the heat exchange unit 20 (exhaust gas flow path 22), the first moisture absorbing unit 30, and the second moisture absorbing unit 40, and is then supplied to the carbon dioxide recovery unit 50. That is, the introduced exhaust gas is first cooled by the heat exchange unit 20. Condensed water generated by condensation of water vapor in the exhaust gas due to cooling of the exhaust gas is recovered by the first moisture absorbing unit 30. The exhaust gas that passes through the heat exchange unit 20 and the first moisture absorbing unit 30 passes through the moisture absorbent 42 of the second moisture absorbing unit 40, and is supplied to the carbon dioxide recovery unit 50 after moisture is absorbed by the moisture absorbent 42. By causing a temperature and humidity of the exhaust gas to be lowered and then recovering carbon dioxide in the exhaust gas by the carbon dioxide absorbent 52 of the carbon dioxide recovery unit 50, carbon dioxide can be efficiently recovered with a small amount of the carbon dioxide absorbent 52. Then, humidity of the remaining exhaust gas that passes through the carbon dioxide recovery unit 50 is lowered, and the remaining exhaust gas passes through the moisture absorbent 23 of the heat exchange unit 20 as the purge gas and is released to an atmosphere. The exhaust gas having the humidity lowered in a state in which moisture is absorbed by the moisture absorbent 23 passes through the moisture absorbent 23, so that the moisture absorbent 23 releases the absorbed moisture with an endothermic reaction and is regenerated. The heat exchange unit 20 cools the exhaust gas flowing through the exhaust gas flow path 22 by the endothermic effect of the moisture absorbent 23. Accordingly, the temperature and humidity of the exhaust gas can be lowered by the heat exchange unit 20 and the first moisture absorbing unit 30 with a simple configuration, and an amount of the moisture absorbent 42 required in the second moisture absorbing unit 40 in a subsequent stage can be reduced. In addition, since the exhaust gas having the humidity lowered in the first moisture absorbing unit 30 and the second moisture absorbing unit 40 is used as the purge gas and passes through the moisture absorbent 23 of the heat exchange unit 20, a heater for regenerating the moisture absorbent 23 is not required, and it is possible to reduce a cost.

In the exhaust recovery mode, when an operation time of the pump 60 reaches a predetermined time, the control device 70 determines that the recovery of carbon dioxide is completed, and ends the exhaust recovery mode. Since a temperature of the carbon dioxide absorbent 52 according to the present embodiment increases immediately before the absorption of carbon dioxide is completed, a temperature sensor for detecting the temperature of the carbon dioxide absorbent 52 may be provided in the container 51 of the carbon dioxide recovery unit 50, and the control device 70 may determine whether the recovery of carbon dioxide is completed based on a detection value from the temperature sensor.

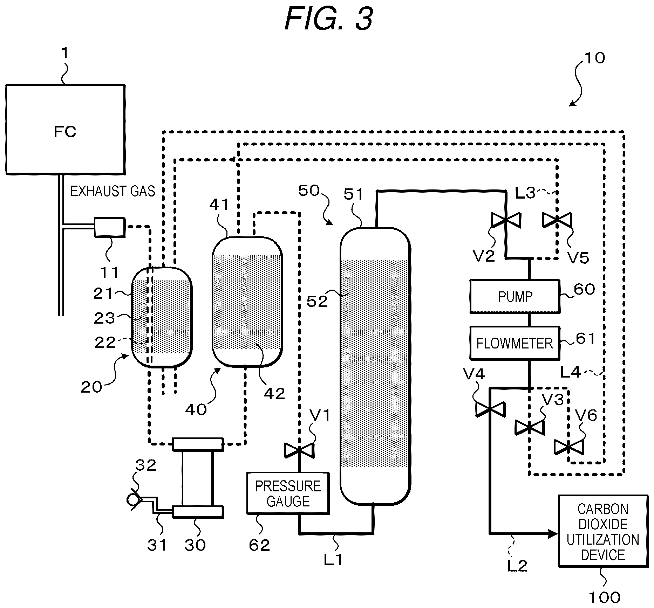

The carbon dioxide separation mode is a mode in which carbon dioxide recovered by the carbon dioxide recovery unit 50 is separated and supplied to the carbon dioxide utilization device 100. FIG. 3 is a diagram showing a flow of a gas (carbon dioxide) in the carbon dioxide separation mode. In the carbon dioxide separation mode, the control device 70 first opens the second opening and closing valve V2 and the fifth opening and closing valve V5 and closes the first opening and closing valve V1, the third opening and closing valve V3, the fourth opening and closing valve V4, and the sixth opening and closing valve V6 to cause the pump 60 to operate. By the operation of the pump 60, the exhaust gas having a low carbon dioxide concentration remaining in the container 51 of the carbon dioxide recovery unit 50 is purged, and an inside of the container 51 of the carbon dioxide recovery unit 50 becomes an evacuated state. Next, the control device 70 causes the pump 60 to stop, closes all of the first opening and closing valve V1 to the sixth opening and closing valve V6, and causes the heater of the carbon dioxide recovery unit 50 to operate. By an operation of the heater, carbon dioxide having a high concentration stored in the carbon dioxide recovery unit 50 (carbon dioxide absorbent 52) is released, and a pressure in the container 51 is increased. Then, when the pressure detected by the pressure gauge 62 reaches a threshold, the control device 70 opens the second opening and closing valve V2 and the fourth opening and closing valve V4 to cause the pump 60 to operate. Accordingly, carbon dioxide having a high concentration released from the carbon dioxide absorbent 52 is supplied to the carbon dioxide utilization device 100 through the third gas line L3 and is effectively utilized. In the present embodiment, the carbon dioxide utilization device 100 is the carbonated spring device, and can generate a carbonated spring in which carbon dioxide having a high concentration is dissolved. Control of a supply amount of carbon dioxide is performed by setting a target flow rate of carbon dioxide according to a request of the carbon dioxide utilization device 100 and controlling the pump 60 under feedback control such that a flow rate detected by the flowmeter 61 becomes the target flow rate. The carbon dioxide recovery apparatus 10 purges the exhaust gas remaining in the container 51 of the carbon dioxide recovery unit 50 and then releases carbon dioxide absorbed by the carbon dioxide absorbent 52, and thus carbon dioxide having a high concentration can be supplied immediately after a start of utilization of carbon dioxide.

In the carbon dioxide separation mode, the control device 70 opens the second opening and closing valve V2 and the fifth opening and closing valve V5 to cause the pump 60 to operate, so as to purge the exhaust gas having a low carbon dioxide concentration remaining in the carbon dioxide recovery unit 50, and then causes the heater of the carbon dioxide recovery unit 50 to operate and opens the second opening and closing valve V2 and the fourth opening and closing valve V4 to cause the pump 60 to operate such that carbon dioxide is supplied to the carbon dioxide utilization device 100. However, the control device 70 may cause the heater of the carbon dioxide recovery unit 50 to operate and open the second opening and closing valve V2 and the fourth opening and closing valve V4 to cause the pump 60 to operate without purging the exhaust gas remaining in the carbon dioxide recovery unit 50.

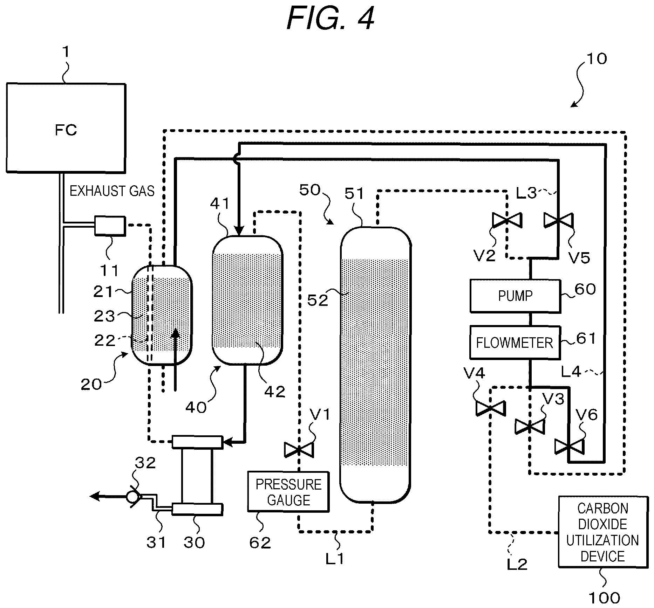

The moisture absorbent regeneration mode is a mode for regenerating the moisture absorbent 42 by causing the moisture absorbed by the moisture absorbent 42 of the second moisture absorbing unit 40 to release. FIG. 4 is a diagram showing a flow of a gas (purge gas) in the moisture absorbent regeneration mode. In the moisture absorbent regeneration mode, the control device 70 opens the fifth opening and closing valve V5 and the sixth opening and closing valve V6 and closes the first opening and closing valve V1, the second opening and closing valve V2, the third opening and closing valve V3, and the fourth opening and closing valve V4 to cause the pump 60 to operate and cause the heater of the second moisture absorbing unit 40 to operate. By the operation of the pump 60, air is absorbed into the container 21 of the heat exchange unit 20 from the atmosphere. The absorbed air passes through the moisture absorbent 23 in the container 21 to recover moisture contained in the air, and then passes through the third gas line L3, the pump 60, and the fourth gas line L4 in this order to be supplied as the purge air into the container 41 of the second moisture absorbing unit 40. By the operation of the heater, moisture is released from the moisture absorbent 42 into the container 41 of the second moisture absorbing unit 40, and the released moisture is purged by air supplied into the container 41. As described above, since the moisture in the air supplied into the container 41 of the second moisture absorbing unit 40 is recovered by the moisture absorbent 23 of the heat exchange unit 20, the moisture absorbent 42 can be regenerated efficiently by dry air. Since the moisture in the air absorbed by the pump 60 is recovered, corrosion of the pump 60 due to the moisture is prevented, and durability of the pump 60 can be further improved. The moisture released from the second moisture absorbing unit 40 (moisture absorbent 42) and the air passing through the second moisture absorbing unit 40 are introduced into the first moisture absorbing unit 30 (moisture trap). As described above, the drain pipe 31 is connected to the bottom of the first moisture absorbing unit 30, and the drain pipe 31 is provided with the check valve 32 that opens when the positive pressure acts on the first moisture absorbing unit 30. Therefore, the moisture in the first moisture absorbing unit 30 is released to the atmosphere together with the introduced air.

As described above, in the carbon dioxide recovery apparatus 10 according to the present embodiment, by opening and closing the first opening and closing valve V1 to the sixth opening and closing valve V6, the modes can be executed by the single pump 60 while switching the exhaust recovery mode, the carbon dioxide separation mode, and the moisture absorbent regeneration mode. As a result, the apparatus can be simplified and downsized.

In the embodiment described above, the carbon dioxide recovery apparatus 10 includes the single pump 60 shared by the exhaust recovery mode, the carbon dioxide separation mode, and the moisture absorbent regeneration mode. Alternatively, the carbon dioxide recovery apparatus 10 may include two or more pumps.

In the embodiment described above, the heat exchange unit 20 cools the exhaust gas by the endothermic effect of the moisture absorbent 23. Alternatively, the exhaust gas may be cooled by heat exchange with another heat exchange medium such as cooling water.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

### Industrial Applicability

This disclosure can be utilized in a production industry of a carbon dioxide recovery apparatus.

## Claims

1. A carbon dioxide recovery apparatus (10) for recovering carbon dioxide contained in an exhaust gas of a fuel cell system (1), the carbon dioxide recovery apparatus (10) comprising:
an inlet unit (11) configured to introduce the exhaust gas of the fuel cell system (1);
a heat exchange unit (20) configured to cool the exhaust gas by heat exchange;
a first moisture absorbing unit (30) configured to separate condensed water from the exhaust gas;
a second moisture absorbing unit (40) configured to absorb moisture of the exhaust gas;
a carbon dioxide recovery unit (50) configured to recover carbon dioxide from the exhaust gas;
a first gas line (L1) connected to an outlet unit through the heat exchange unit (20), the first moisture absorbing unit (30), the second moisture absorbing unit (40), and the carbon dioxide recovery unit (50) in this order from the inlet unit (11); and
a pump (60) provided in the first gas line (L1).

2. The carbon dioxide recovery apparatus (10) according to claim 1, further comprising:
a second gas line (L2); and
a first opening and closing valve (V1), a second opening and closing valve (V2), a third opening and closing valve (V3), and a fourth opening and closing valve (V4), wherein
the pump (60) is provided downstream of the carbon dioxide recovery unit (50) in the first gas line (L1),
the second gas line (L2) is branched from downstream of the pump (60) in the first gas line (L1) and connected to a carbon dioxide utilization device (100) configured to utilize carbon dioxide,
the first opening and closing valve (V1) is provided between the second moisture absorbing unit (40) and the carbon dioxide recovery unit (50) in the first gas line (L1),
the second opening and closing valve (V2) is provided between the carbon dioxide recovery unit (50) and the pump (60) in the first gas line (L1),
the third opening and closing valve (V3) is provided downstream of a branch point (B1) to the second gas line (L2) in the first gas line (L1),
the fourth opening and closing valve (V4) is provided in the second gas line (L2), and
operation modes of the carbon dioxide recovery apparatus (10) include a first mode in which the pump (60) is operated in a state in which the first opening and closing valve (V1), the second opening and closing valve (V2), and the third opening and closing valve (V3) are opened, and a second mode in which carbon dioxide recovered by the carbon dioxide recovery unit (50) is released and the pump (60) is operated in a state in which the second opening and closing valve (V2) and the fourth opening and closing valve (V4) are opened.

3. The carbon dioxide recovery apparatus (10) according to claim 2, further comprising:
a third gas line (L3) and a fourth gas line (L4); and
a fifth opening and closing valve (V5) and a sixth opening and closing valve (V6), wherein
the second moisture absorbing unit (40) includes a moisture absorbent (42) accommodated in an internal space,
the third gas line (L3) is branched from between the second opening and closing valve (V2) and the pump (60) in the first gas line (L1) to introduce purge air,
the fourth gas line (L4) is branched from between the pump (60) and the third opening and closing valve (V3) in the first gas line (L1), and is connected to the second moisture absorbing unit (40),
the first moisture absorbing unit (40) stores the condensed water, and is opened to an outside by a positive pressure, and
the operation modes of the carbon dioxide recovery apparatus (10) further include a third mode in which the pump (60) is operated in a state in which moisture absorbed by the second moisture absorbing unit (40) is released and the fifth opening and closing valve (V5) and the sixth opening and closing valve (V6) are opened.

4. The carbon dioxide recovery apparatus (10) according to any one of claims 1 to 3, wherein
the heat exchange unit (20) includes a container in which an internal space is formed, an exhaust gas flow path which penetrates the internal space and through which the exhaust gas from the inlet unit (11) flows, and a moisture absorbent (23) which is accommodated in the internal space, absorbs ambient moisture, and releases the absorbed moisture with an endothermic reaction, and
the first gas line (L1) is formed such that the exhaust gas passing through the carbon dioxide recovery unit (50) passes through the moisture absorbent (23) of the heat exchange unit (20).
